# EUROPÄISCHE PATENTSCHRIFT

(11) **EP 1 661 743 B1**
(45) Veröffentlichungstag und Bekanntmachung des Hinweises auf die Patenterteilung: **10.09.2008**
(21) Anmeldenummer: 05025681.7
(22) Anmeldetag: 24.11.2005
(51) Int. Cl.: B60J 1/20

(54) **Fensterrollo für ein Fahrzeugfenster**
Roller blind for a vehicle window
Store pour une fenêtre de véhicule

(30) Priorität: 25.11.2004 DE 202004018292 U
(43) Veröffentlichungstag der Anmeldung: 31.05.2006
(73) Patentinhaber: HS Products Engineering GmbH, 82239 Alling (DE)
(72) Erfinder: Ziegenbein, Werner, 81929 München (DE)
(74) Vertreter: Eisenführ, Speiser & Partner

(56) Entgegenhaltungen:
- DE-A1- 10 017 011
- DE-A1- 10 151 251
- DE-A1- 19 839 078
- FR-A1- 2 588 307
- GB-A- 2 278 141
- US-A- 6 047 762

## Beschreibung

Die Erfindung betrifft ein Fensterrollo für ein Fahrzeugfenster mit einer auf- und abwickelbaren Rollobahn, deren Fläche an die Form der abzudeckenden Fensterfläche angepasst ist, einem Zugstab am ausziehbaren Rollobahnende und einem an den Zugstab angelenkten Aufstellmechanismus, der zum Bewegen der Rollobahn mit einer Antriebseinrichtung verbunden ist.

Ein derartiges Fensterrollo ist aus DE 100 17 011 C2 bekannt. Beim bekannten Fensterrollo beinhaltet ein Aufstellmechanismus zwei gelenkig miteinander verbundene Hebel, von denen der eine Hebel in einer fahrzeugfesten Anlenkstelle schwenkbar am Fahrzeug gelagert ist und der andere Hebel, welcher an den ersten Hebel angelenkt ist, linear von einer Antriebseinrichtung zum Aufwickeln und Abwickeln der Rollobahn angetrieben wird. Hierdurch erreicht man eine synchrone Aufstellbewegung der an beiden Seiten der Rollobahn vorgesehenen Aufstellhebelmechanismen.

Die Druckschrift GB 2 278 141 A betrifft ein Rollo, das mittels eines entsprechenden Mechanismus aufgestellt oder eingezogen werden kann. Der Mechanismus wird dabei durch eine elektrische Antriebseinrichtung (Elektromotor) angetrieben. Das Rollo bzw. eine Rollobahn dient vorzugsweise zum Abblenden von Fenstern und insbesondere eine Heckscheibe eines Kraftfahrzeugs. Der Mechanismus zum Aufstellen oder Absenken der Rollobahn umfasst eine Vielzahl von Hebeln, wobei an einem zentralen Hebel ein Haltestab, an dem die Rollobahn zum Aufstellen und Absenken befestigt ist, angelenkt ist. Bei einer Bewegung des Aufstellmechanismus aus der jeweiligen Ruhelage mit einer eingezogenen oder abgesenkten Rollobahn wird entlang einer im Wesentlichen geraden Schiene ein Anlenkungspunk des zentralen Hebels senk-recht zu der Bewegung zum Aufstellen des Rollos bewegt, so dass der an dem zentralen Hebel befestigte Haltestab relativ zu einer Anordnung an einer Heckscheibe eines Kraftfahrzeugs nach oben bewegt wird. Die Führung des Haltestabs erfolgt neben der Anlenkung an dem Haupthebel durch die an dem Haltestab befestigte Rollobahn, die bei der Bewegung des Ausfahrens der Rollobahn von einer beweglich gelagerten Rolle in einer Anordnung parallel zu der Bewegungsrichtung des Elektromotors abgewickelt wird. Nach dem Erreichen des Endpunkts der Bewegung des Mechanismus zum Aufstellen der Rollobahn steht der zentrale Hebel im Wesentlichen senkrecht. Das Absenken erfolgt ebenfalls mittels einer Betätigung des Elektromotors.

Des Weiteren offenbart die Druckschrift US 6 047 762 einen Mechanismus zum Bewegen eines Rollo an einem Fenster eines Kraftfahrzeugs, wobei in Schienen links und rechts des Fensters Federelemente geführt werden, die zusammen mit der ausfahrbaren Rollobahn in einem Bereich unterhalb der unteren Fensterkante aufgewickelt sind. Wird ein zur Betätigung und insbesondere zum Ausfahren der Rollobahn an der Rolle angeordneter Elektromotor betätigt, dann werden die Federelemente von der Rolle abgewickelt und schieben in Verbin- [small lefter] dung mit einer Führung durch die Schienen links und rechts des Fensters einen Befestigungsstab nach oben, an dem die Rollobahn befestigt ist und wodurch die Rollobahn ebenfalls abgewickelt wird.

Schließlich offenbart die Druckschrift DE 198 39 078 A1 ein elektromechanisch betätigtes Fensterrollo, das insbesondere zur Anbringung an Fenstern eines Kraftfahrzeugs geeignet ist, wobei mittels eines elektromotorischen Antriebs, der über ein Getriebe auf eine Spindel wirkt, ein Hebelmechanismus betätigt wird, der in Verbindung mit einer Bewegung eines entsprechenden Befestigungselements des Hebels auf der Spindel bei deren Drehung derart bewegt wird, dass der Hebel durch eine nach oben gerichtete Bewegung ein daran befestigtes Rollotuch nach oben bewegt und somit vor der Scheibe des Kraftfahrzeugfensters ausbreitet. Hierbei ist insbesondere die Spindel zur Bewegung des Hebelmechanismus parallel zu einer Wickelwelle angeordnet, auf der im versenkten Zustand oder Ruhezustand das Rollotuch aufgewickelt ist und von der bei dem Ausfahren das Rollotuch zum Abdecken des Kraftfahrzeugfensters abgewickelt wird.

Aufgabe der Erfindung ist es, die Rollobahn mit einem einzigen Aufstellhebelmechanismus auf- und abzuwickeln.

Diese Aufgabe wird erfindungsgemäss gelöst durch ein Fensterrollo für ein Fahrzeugfenster gemäß den im Patentanspruch 1 angegebenen Merkmalen.

Gemäß der vorliegenden Erfindung umfasst das Fensterrollo für ein Fahrzeugfenster eine auf- und abwickelbare Rollobahn, deren Fläche an die Form der abzudeckenden Fensterfläche angepasst ist, einem Zugstab am ausziehbaren Rollobahnende und einem an den Zugstab angelenkten Aufstellmechanismus, der zum Bewegen der Rollobahn mit einer Antriebseinrichtung verbunden ist. Der Aufstellhebelmechanismus weist einen Aufstellhebel auf, der an seinem einen Hebelende mit dem Zugstab und an seinem anderen Hebelende, welches geradlinig in einer Führungseinrichtung geführt ist, mit der Antriebseinrichtung verbunden ist, und ein an einem Fahrzeugteil, insbesondere einer Fahrzeugtür abgestützter Stützhebel ist zwischen den beiden Hebelenden am Aufstellhebel angelenkt. Ferner besitzt der Aufstellhebel eine Z-Form, bei dem an einem mittleren, insbesondere geradlinigen Hebelteil, an welchem der Stützhebel angelenkt ist, zwei in entgegengesetzten Richtungen abgewinkelte Hebelteile vorgesehen sind. An diesen abgewinkelten Hebelteilen sind das am Zugstab angelenkte Hebelende und das mit der Antriebseinrichtung verbundene Hebelende vorgesehen. Der mittlere Hebelteil des Aufstellhebels liegt in der vollständig ausgezogenen Stellung der Rollobahn an einem Fensterteilungssteg an.

In einer weiteren Ausgestaltung besitzt der Stützhebel vorzugsweise eine etwa L-Form. Bei ausgezogener Rollobahn sind die beiden Hebelschenkel des L-förmigen Stützhebels parallel zum mittleren Hebelteil und zu dem mit der Antriebseinrichtung verbundenen abgewinkelten Hebelteil des Aufstellhebels angeordnet. Hierdurch ist es möglich, bei ausgezogener Rollobahn den mittleren geradlinigen Hebelteil des Aufstellhebels und den mit dem Aufstellhebel verbundenen Hebelschenkel des Stützhebels parallel zu einer Fensterbegrenzung, insbesondere einem Fensterteilungssteg zwischen einem Dreieckfenster und einem Seitenfenster des Fahrzeugs anzuordnen. Vorzugsweise dient die Rollobahn zum Abdecken eines Dreieckfensters in der Fondtür eines Fahrzeugs oder eines Seitenfensters im Fondbereich eines Fahrzeugs.

Das Fensterrollo ist vorzugsweise mit schräger Anordnung seiner Rollokassette, in welcher die Rollobahn aufgewickelt ist, gegenüber der Fensterunterkante des abzudeckenden Fensters, die im wesentlichen waagrecht verläuft, am Fahrzeug befestigt. Insbesondere besitzt die Rollokassette die gleiche Neigungsrichtung, wie der Verlauf der Fensteroberkante des mit der Rollobahn abzudeckenden Fensters. Hierzu kann die Rollokassette parallel oder annährend parallel zum Verlauf der Fensteroberkante angeordnet sein.

In den Figuren wird anhand eines Ausführungsbeispiels die Erfindung noch näher erläutert.

Es zeigt
- Fig. 1: eine Seitenansicht des Ausführungsbeispiels in einer Zwischenposition der teilweise ausgezogenen Rollobahn; und
- Fig. 2: eine Seitenansicht des Ausführungsbeispiels bei vollständig ausgezogener Rollobahn.

Das dargestellte Ausführungsbeispiel weist eine Rollobahn 2 auf, welche in Bewegungsrichtungen 22 auf einer in einer Rollokassette 18 angeordneten Rollowelle auf- und abgewickelt werden kann. Die Rollobahn 2 dient zum Abdecken einer Fensterfläche eines Fahrzeugfensters 1, welches beim dargestellten Ausführungsbeispiel ein sogenanntes Dreieckfenster ist und eine unregelmäßige Trapezform aufweisen kann, wie das Ausführungsbeispiel zeigt. Das von der Rollobahn als Sonnenschutzrollo abzudeckende Fahrzeugfenster 1 ist durch einen Fensterteilungssteg 17 von einem weiteren Seitenfenster des Fahrzeugs abgetrennt. Die beiden Fenster befinden sich vorzugsweise im Fondbereich eines Fahrzeugs und können die Seitenfenster in einer Fahrzeugtür des Fondbereichs bilden.

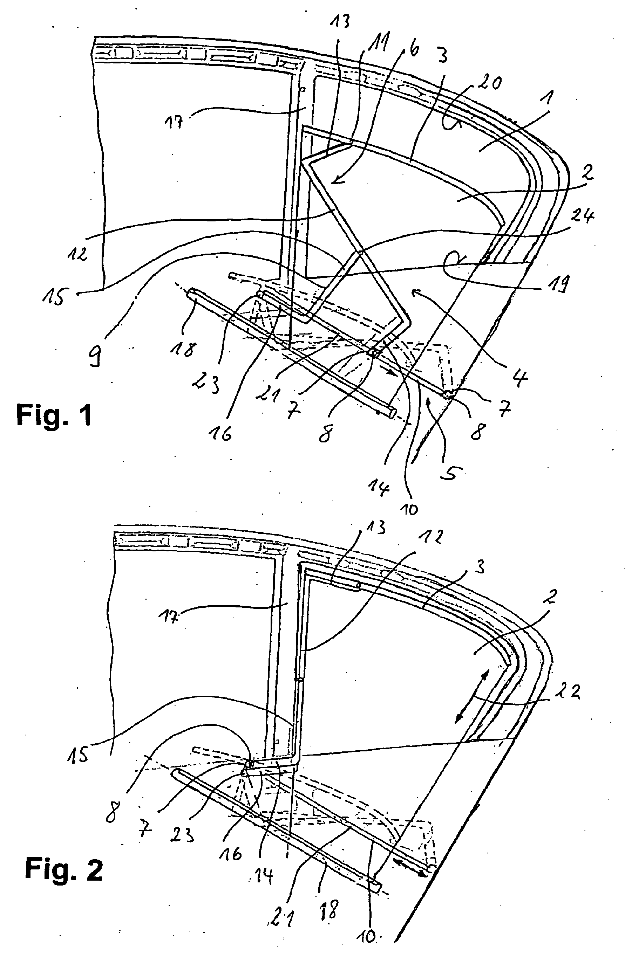

Zum Auf- und Abwickeln der Rollobahn 2 ist am ausziehbaren Rollobahnende ein Zugstab 3 befestigt, dessen Form dem Verlauf einer Fensteroberkante 20, welche die abzudeckende Fensterfläche nach oben hin begrenzt, angepasst ist, wie insbesondere aus Fig. 2 zu ersehen ist. Zur Bewegung des Zugstabes 3 sowie der Rollobahn 2 dient ein Aufstellhebelmechanismus 4, welcher einen Aufstellhebel 6 mit etwa Z-Form sowie einen Stützhebel 9 mit etwa L-Form aufweist. Der Aufstellhebel 6 besitzt einen mittleren geradlinig verlaufenden Hebelteil 12 sowie an den beiden Enden dieses mittleren Hebelteils abgewinkelte Hebelteile 13 und 14. Der beim Ausziehen der Rollobahn 2 oder bei ausgezogener Rollobahn 2 oben liegende abgewinkelte Hebelteil 13 ist an seinem Ende 11 an den Zugstab 3 schwenkbar angelenkt. Der dabei unten liegende abgewinkelte Hebelteil 14 ist mit seinem Ende 8 an einen Schlitten 7 angelenkt, der entlang einer Führungseinrichtung 10 beim Aufwickeln und Abwickeln der Rollobahn 2 geradlinig geführt wird. Hierzu kann der Schlitten 7 auf einer zum Antrieb 5 gehörigen oder an Antrieb 5 bildenden Spindel 21 bei der Spindeldrehung hin- und herbewegt werden. Der Antrieb der Spindel 21 kann in bekannter Weise mit Hilfe eines Elektromotors oder von Hand erfolgen.

Am mittleren Hebelteil 12 ist in dessen Mitte oder in der Nähe seiner Mitte der L-förmige Stützhebel 9 in einer Verbindungsstelle 24 schwenkbar angelenkt. Das andere Ende des Stützhebels 9 ist schwenkbar am Fahrzeug, beispielsweise an der Tür in einem fest mit dem Fahrzeug verbundenen Lager 23 schwenkbar gelagert. Hierdurch wird der Aufstellhebel 6 an seinem mittleren Hebelteil 21 über den Stützhebel 9 am Fahrzeug beim Auf- und Abwickeln der Rollobahn 2 abgestützt.

Die Positionen des Zugstabes 3, des Aufstellhebels 6 und des Stützhebels 9 sind in der Ruhelage der Rollobahn 2 in strichlierten Linien in den Fig. 1 und 2 dargestellt. In dieser Ruhelage ist die Rollobahn 2 unterhalb einer Fensterunterkante 19, welche das abzudeckende Fahrzeugfenster 1 nach unten hin begrenzt, angeordnet und größtenteils in einer Rollokassette 18 auf eine Rollowelle aufgewickelt. Zum Herausziehen der Rollobahn 2 aus der Rollokassette 18 wird die Spindel 21 gedreht, so dass der Schlitten 7 aus seiner rechten strichlierten Position nach links schräg oben entlang der schräg und parallel zur Rollokassette 18 angeordneten Spindel 21 bewegt wird. Dabei wird der Zugstab 3 aus der strichlierten Position schräg nach oben in Richtung zur Fensteroberkante 20 hin bewegt und zieht, wie aus Fig. 1 durch die ausgezogenen Linien dargestellt ist, die Rollobahn aus der Rollokassette 18. Dabei wird die Linearbewegung des Schlittens 7 und des Hebelendes 8, welche parallel zur Rollokassette 18 ausgerichtet ist, durch die Getriebewirkung des Aufstellhebelmechanismus 4 in eine im wesentlichen senkrecht zur Linearbewegung des Schlittens 7 verlaufende Aufstellbewegung gewandelt. Diese Aufstellbewegung wird auf den Zugstab 3 übertragen. In der Fig. 1 ist in ausgezogenen Linien eine Zwischenposition der den Aufstellmechanismus 4 bildenden Aufstellhebel 6 und Stützhebel 9 dargestellt. Dabei wird die Verbindungsstelle 24, in welcher der Aufstellhebel 6 schwenkbar mit dem Stützhebel 9 verbunden ist, aus der unteren strichliert dargestellten Position angehoben. Gleichzeitig wird der Aufstellhebel 6 um die Verbindungsstelle 24 geschwenkt, wodurch die beschriebene Aufstellbewegung senkrecht zur Bewegungsrichtung des Schlittens 7 entsteht und vom Zugstab 3 auf die Rollobahn 2 übertragen wird. Der Aufstellhebel 6 ist dabei, wie schon erläutert, über den Stützhebel 9 im fahrzeugfesten Lager 23 sowie an der ebenfalls fahrzeugfest gelagerten Spindel 21 an dem mit dem Schlitten 7 mitbewegten Hebelende 8 abgestützt.

Bei der sich fortsetzenden Aufstellbewegung wird der Zugstab 3 bis an die Fensteroberkante 20 bewegt, wie es in Fig. 2 dargestellt ist. Der Schlitten 7 mit dem daran gelagerten Hebelende 8 werden an der Spindel 21 in die linke Endposition dabei bewegt. Ferner wird der Aufstellhebel 6 so weit verschwenkt, dass er zum Fensterteilungssteg 17, welcher die beiden Seitenfenster voneinander trennt, mit seinem mittleren Hebelteil 12 parallel verlauf und am Fensterteilungssteg 17 anliegt, wie es in Fig. 2 dargestellt ist. Ferner sind die Hebelschenkel 15 und 16 des Stützhebels 9 so bemessen, dass der Hebelschenkel 15, an dessem Ende die Verbindungsstelle 24 liegt, ebenfalls parallel zum Fensterteilungssteg 17 und zum mittleren Hebelteil 12 des Aufstellhebels 6 liegt. Der andere Hebelschenkel 16 des Stützhebels 9 ist parallel zum abgewinkelten Hebelteil 14, an dessen Ende der Schlitten 7 vorgesehen ist, parallel ausgerichtet. Durch die Rollobahn 2 wird im wesentlichen die gesamte Fläche des Fahrzeugfensters 1 abgedeckt. Die Rollobahn 2 bildet hierdurch einen Sonnenschutz und kann bei entsprechender Ausbildung der Rollobahn 2 auch einen Sichtschutz bilden.

Bei der in der Fig. 2 dargestellten vollständig ausgezogenen Stellung der Rollobahn 2 ist der abgewinkelte Hebelteil 13 parallel zum Zugstab 3 angeordnet und liegt vorzugsweise am Zugstab 3 an und bildet somit entlang seiner Hebellänge eine Stütze für den Zugstab 3.

Zum Aufwickeln der Rollobahn 2 wird die Spindel 21 so angetrieben, dass der Schlitten 7 aus der in der Fig. 2 dargestellten linken Endposition in die strichliert dargestellte rechte Endposition bewegt wird. Dabei wird die Rollobahn 2 auf die in der Rollokassette 18 befindliche Rollowelle aufgewickelt und der Zugstab 3 sowie der Aufstellhebelmechanismus 4 werden in die strichliert dargestellten Ruhepositionen gebracht.

### [Bezugszeichenliste]

- 1: Fahrzeugfenster
- 2: Rollobahn
- 3: Zugstab
- 4: Aufstellhebelmechanismus
- 5: Antriebseinrichtung
- 6: Aufstellhebel
- 7: Schlitten
- 8: Hebelende
- 9: Stützhebel
- 10: Führungseinrichtung
- 11: Hebelende
- 12: mittlerer Hebelteil
- 13,14: abgewinkelte Hebelteile
- 15,16: Hebelschenkel
- 17: Fensterteilungssteg
- 18: Rollokassette
- 19: Fensterunterkante
- 20: Fensteroberkante
- 21: Spindel
- 22: Bewegungsrichtungen der Rollobahn
- 23: Lager
- 24: Verbindungsstelle

## Patentansprüche

1. Fensterrollo für ein Fahrzeugfenster mit einer auf- und abwickelbaren Rollbahn, deren Fläche an die Form der abzudeckenden Fensterfläche angepasst ist, einem Zugstab am ausziehbaren Rollobahnende und einem an den Zugstab angelenkten Aufstellhebelmechanismus, der zum Bewegen der Rollobahn mit einer Antriebseinrichtung verbunden ist, wobei
der Aufstellhebelmechanismus (4) einen Aufstellhebel (6) aufweist, der an seinem einen Hebelende (11) mit dem Zugstab (3) und an seinem anderen Hebelende (8), welches geradlinig in einer Führungseinrichtung (10) geführt ist, mit der Antriebseinrichtung (5) verbunden ist, und wobei ein an einem Fahrzeugteil abgestützter Stützhebel (9) zwischen den beiden Hebelenden (8, 11) am Aufstellhebel (6) angelenkt ist, **dadurch gekennzeichnet, dass** der Aufstellhebel (6) eine Z-Form aufweist, wobei an einem mittleren Hebelteil (12) der Stützhebel (9) angelenkt ist, und zwei an den beiden Enden des mittleren Hebelteils (12) abgewinkelte Hebelteile (13, 14) vorgesehen sind, von denen der eine Hebelteil (13) am Zugstab (3) angelenkt ist und der andere Hebelteil (14) das mit der Antriebseinrichtung (5) verbundene Hebelende (8) aufweist, wobei der mittlere Hebelteil (12) des Aufstellhebels (6) in der vollständig ausgezogenen Stellung der Rollobahn (2) an einem Fensterteilungssteg (17) anliegt.

2. Fensterrollo nach Anspruch 1, **dadurch gekennzeichnet, dass** der Stützhebel (9) eine etwa L-Form aufweist und dass bei ausgezogener Rollobahn (2) die beiden Hebelschenkel (15, 16) des Stützhebels (9) parallel zum mittleren Hebelteil (12) und zu dem mit der Antriebseinrichtung (5) verbundenen abgewinkelten Hebelteil (14) des Aufstellhebels (6) angeordnet sind.

3. Fensterrollo nach einem der Ansprüche 1 oder 2, **dadurch gekennzeichnet, dass** bei ausgezogener Rollobahn (2) der an den Zugstab (3) angelenkte abgewinkelte Hebelteil (13) des Aufstellhebels (5) parallel zum Zugstab (3) angeordnet ist.

4. Fensterrollo nach einem der Ansprüche 1 bis 3, **dadurch gekennzeichnet, dass** bei ausgezogener Rollobahn (2) der an den Zugstab (3) angelenkte abgewinkelte Hebelteil (13) des Aufstellhebels (6) am Zugstab (3) anliegt.

5. Fensterrollo nach einem der Ansprüche 1 bis 4, **dadurch gekennzeichnet, dass** der mittlere Hebelteil (12) des Aufstellhebels (6) geradlinig ausgebildet ist und bei ausgezogener Rollobahn (2) mit dem einen Hebelschenkel (15) des Stützhebels (9) parallel zu einer Fensterbegrenzung, insbesondere einem Fensterteilungssteg (17) angeordnet ist.

6. Fensterrollo nach einem der Ansprüche 1 bis 5, **dadurch gekennzeichnet, dass** eine die aufgewickelte Rollobahn (2) aufnehmende Rollokassette (18) gegenüber einer Fensterunterkante (19) des abzudeckenden Fahrzeugfensters (1) mit schräger Anordnung und unterhalb der Fensterunterkante (19) angeordnet ist.

7. Fensterrollo nach Anspruch 6, **dadurch gekennzeichnet, dass** das mit der Antriebseinrichtung (5) verbundene Hebelende (8) parallel zur Rollokassette (18) geführt ist.

8. Fensterrollo nach einem der Ansprüche 6 bis 7, **dadurch gekennzeichnet, dass** die Rollokassette (18) etwa die gleiche Neigungsrichtung aufweist, wie der Verlauf der Fensteroberkante (20) des abzudeckenden Fahrzeugfensters (1).

9. Fensterrollo nach einem der Ansprüche 1 bis 8, **dadurch gekennzeichnet, dass** die Form des Zugstabes (3) dem Verlauf der Fensteroberkante (20) angepasst ist.

10. Fensterrollo nach einem der Ansprüche 1 bis 9, **dadurch gekennzeichnet, dass** die Antriebseinrichtung (5) eine Spindel (21) aufweist, auf welcher ein das anzutreibende Hebelende (8) des Aufstellhebels (6) aufweisender Schlitten (7) bei Spindeldrehung geradlinig entlang der Spindel (21) bewegt wird.

11. Fensterrollo nach einem der Ansprüche 1 bis 10, **dadurch gekennzeichnet, dass** der Aufstellhebel (6) über sein geradlinig angetriebenes Hebelende (8) und den Stützhebel (9) am Fahrzeug abgestützt ist.

12. Fensterrollo nach einem der Ansprüche 1 bis 11, **dadurch gekennzeichnet, dass** der Aufstellhebel (6) bei der Rollobahnbewegung um eine Verbindungsstelle (24), an welcher der Stützhebel (9) angelenkt ist, und um das geradlinig angetriebene Hebelende (8) geschwenkt ist.

13. Fensterrollo nach Anspruch 12, **dadurch gekennzeichnet, dass** bei der Rollobahnbewegung die Verbindungsstelle (24) um ein fahrzeugfestes Lager (23) geschwenkt ist.

14. Fensterrollo nach einem der Ansprüche 1 bis 13, **dadurch gekennzeichnet, dass** der Stützhebel (9) im fahrzeugfesten Lager (23) schwenkbar gelagert ist.

## Claims

1. A window blind for a vehicle window comprising a blind web which can be wound up and down and the surface of which is adapted to the shape of the window surface to be covered, a pull bar at the extensible end of the blind web and an erecting lever mechanism which is pivotably connected to the pull bar and which is connected to a drive device for moving the blind web, wherein the erecting lever mechanism (4) has an erecting lever (6) which at its one lever end (11) is connected to the pull bar (3) and which at its other lever end (8) which is guided rectilinearly in a guide device (10) is connected to the drive device (5) and wherein a support lever (9) supported on a part of the vehicle is pivotably connected to the erecting lever (6) between the two lever ends (8, 11), **characterised in that** the erecting lever (6) is of a Z-shaped form, wherein the support lever (9) is pivotably connected to a central lever portion (12) and there are provided two lever portions (13, 14) which are angled at the two ends of the central lever portion (12) and of which the one lever portion (13) is pivotably connected to the pull bar (3) and the other lever portion (14) has the lever end (8) connected to the drive device (5), wherein the central lever portion (12) of the erecting lever (6) bears against a window divider bar (17) in the completely extended position of the blind web (2).

2. A window blind according to claim 1 **characterised in that** the support lever (9) is of a substantially L-shape and when the blind web (2) is extended the two lever arms (15, 16) of the support lever (9) are arranged parallel to the central lever portion (12) and to the angled lever portion (14), which is connected to the drive device (5), of the erecting lever (6).

3. A window blind according to one of claims 1 and 2 **characterised in that** when the blind web (2) is extended the angled lever portion (13), which is pivotably connected to the pull bar (3), of the erecting lever (5) is arranged parallel to the pull bar (3).

4. A window blind according to one of claims 1 to 3 **characterised in that** when the blind web (2) is extended the angled lever portion (13), which is pivotably connected to the pull bar (3), of the erecting lever (5) bears against the pull bar (3).

5. A window blind according to one of claims 1 to 4 **characterised in that** the central lever portion (12) of the erecting lever (6) is of a straight configuration and when the blind web (2) is extended it is arranged with the one lever arm (15) of the support lever (9) parallel to a window delimitation means, in particular a window divider bar (17).

6. A window blind according to one of claims 1 to 5 **characterised in that** a blind cassette (18) which receives the wound-up blind web (2) is disposed in relation to a lower edge (19) of the vehicle window (1) to be covered in an inclined arrangement and beneath the lower edge (19) of the window.

7. A window blind according to claim 6 **characterised in that** the lever end (8) connected to the drive device (5) is guided parallel to the blind cassette (18).

8. A window blind according to one of claims 6 and 7 **characterised in that** the blind cassette (18) is of approximately the same direction of inclination as the configuration of the upper edge (20) of the vehicle window (1) to be covered.

9. A window blind according to one of claims 1 to 8 **characterised in that** the shape of the pull bar (3) is adapted to the configuration of the upper edge (20) of the window.

10. A window blind according to one of claims 1 to 9 **characterised in that** the drive device (5) has a spindle (24) on which a carriage (7) having the lever end (8) to be driven of the erecting lever (6) is moved in a straight line along the spindle (21) upon rotation of the spindle.

11. A window blind according to one of claims 1 to 10 **characterised in that** the erecting lever (6) is supported on the vehicle by way of its rectilinearly driven lever end (8) and the support lever (9).

12. A window blind according to one of claims 1 to 11 **characterised in that** the erecting lever (6) is pivoted upon movement of the blind web about a connecting location (24) at which the support lever (9) is pivotably connected and about the rectilinearly driven lever end (8).

13. A window blind according to claim 12 **characterised in that** the connecting location (24) is pivoted about a mounting (23) fixed with respect to the vehicle in the movement of the blind web.

14. A window blind according to one of claims 1 to 13 **characterised in that** the support lever (9) is mounted pivotably in the mounting (23) fixed with respect to the vehicle.

## Revendications

1. Store pour une fenêtre de véhicule, comprenant un rideau enroulable et déroulable, dont la surface est adaptée à la forme de la surface de la fenêtre à recouvrir, une barre de traction sur l'extrémité du rideau pouvant être tirée, et un mécanisme de leviers de levée articulé sur la barre de traction, lequel mécanisme est raccordé à un dispositif d'entraînement pour le déplacement du rideau, le mécanisme de leviers de levée (4) comportant un levier de levée (6), qui est raccordé sur l'une de ses extrémités de levier (11) à la barre de traction (3) et sur son autre extrémité de levier (8), qui est guidée linéairement dans un dispositif de guidage (10), au dispositif d'entraînement (5), et un levier d'appui (9), supporté sur une partie du véhicule, s'articulant sur le levier de levée (6) entre les deux extrémités (8, 11) de ce dernier, **caractérisé en ce que** le levier de levée (6) présente une forme en Z, le levier d'appui (9) s'articulant sur une partie centrale de levier (12), et deux parties de levier (13, 14) coudées étant prévues aux deux extrémités de la partie de levier centrale (12), dont l'une des parties de levier (13) s'articule sur la barre de traction (3) et l'autre partie de levier (14) présente l'extrémité de levier (8) raccordée au dispositif d'entraînement (5), la partie de levier centrale (12) du levier de levée (6) s'appliquant sur une traverse de partage de fenêtre (17) dans la position totalement tirée du rideau de store (2).

2. Store pour fenêtre suivant la revendication 1, **caractérisé en ce que** le levier d'appui (9) présente une forme à peu près en L et que, dans la position tirée du rideau de store (2), les deux branches (15, 16) du levier d'appui (9) sont disposées parallèlement à la partie centrale de levier (12) et à la partie coudée (14) du levier de levée (6), raccordée au dispositif d'entraînement (5).

3. Store pour fenêtre suivant l'une des revendications 1 et 2, **caractérisé en ce que**, dans la position tirée du rideau de store (2), la partie (13) coudée du levier de levée(6), articulée sur la barre de traction (3), est disposée parallèlement à la barre de traction (3).

4. Store pour fenêtre suivant l'une des revendications 1 à 3, **caractérisé en ce que**, dans la position tirée du rideau de store (2), la partie (13) coudée du levier de levée (6), articulée sur la barre de traction (3), s'applique sur la barre de traction (3).

5. Store pour fenêtre suivant l'une des revendications 1 à 4, **caractérisé en ce que** la partie centrale de levier (12) du levier de levée (6) a une configuration rectiligne et est disposée avec l'une des branches (15) du levier d'appui (9), en position tirée du rideau de store (2), parallèlement à une délimitation de fenêtre, en particulier à une traverse de partage de fenêtre (17).

6. Store pour fenêtre suivant l'une des revendications 1 à 5, **caractérisé en ce qu'**un caisson d'enroulement (18), recevant le rideau de store (2) enroulé, est disposé par rapport à un bord inférieur (19) de la fenêtre de véhicule (1) à recouvrir en agencement oblique et au-dessous du bord inférieur de fenêtre (19).

7. Store pour fenêtre suivant la revendication 6, **caractérisé en ce que** l'extrémité de levier (8), raccordée au dispositif d'entraînement (5), est guidée parallèlement au caisson d'enroulement (18).

8. Store pour fenêtre suivant l'une des revendications 6 et 7, **caractérisé en ce que** le caisson d'enroulement (18) présente à peu près la même direction d'inclinaison que l'allure du bord supérieur (20) de la fenêtre de véhicule (1) à recouvrir.

9. Store pour fenêtre suivant l'une des revendications 1 à 8, **caractérisé en ce que** la forme de la barre de traction (3) est adaptée à l'allure du bord supérieur (20) de la fenêtre.

10. Store pour fenêtre suivant l'une des revendications 1 à 9, **caractérisé en ce que** le dispositif d'entraînement (5) comporte une broche (21), sur laquelle un coulisseau (7), présentant l'extrémité (8) à entraîner du levier de levée (6), est déplacé linéairement le long de la broche (21) lors de la rotation de cette dernière.

11. Store pour fenêtre suivant l'une des revendications 1 à 10, **caractérisé en ce que** le levier de levée (6) est supporté sur le véhicule par l'intermédiaire de son extrémité (8) entraînée linéairement et du levier d'appui (9).

12. Store pour fenêtre suivant l'une des revendications 1 à 11, **caractérisé en ce que** le levier de levée (6) pivote, lors du déplacement du rideau de store, autour d'un point d'assemblage (24), sur lequel s'articule le levier d'appui (9), et autour de l'extrémité de levier (8) entraînée linéairement.

13. Store pour fenêtre suivant la revendication 12, **caractérisé en ce que**, lors du déplacement du rideau de store, le point d'assemblage (24) pivote autour d'un palier (23) solidaire du véhicule.

14. Store pour fenêtre suivant l'une des revendications 1 à 13, **caractérisé en ce que** le levier d'appui (9) est monté pivotant dans le palier (23) solidaire du véhicule.
